# EUROPEAN PATENT APPLICATION

(11) **EP 4 567 503 A1**
(43) Date of publication of application: **11.06.2025**
(21) Application number: 23214488.1
(22) Date of filing: 06.12.2023
(51) Int. Cl.: G02F 1/025, G02F 1/03, G02F 1/035, G02F 1/05

(54) **AN ELECTRO-OPTICAL MODULATOR**

(71) Applicant: Imec VZW, 3001 Leuven (BE)
(72) Inventor: Soussan, Philippe, 1300 Wavre (BE); Seema Saseendran, Sandeep, 3012 Wilsele (BE); Brouckaert, Joost, 8500 Kortrijk (BE); Sharif Azadeh, Mohammad Saeed, 3001 Leuven (BE)
(74) Representative: Roth, Sebastian

(57) **Abstract**

The disclosure proposes an integrated electro-optical modulator, and a corresponding method of fabricating the electro-optical modulator. The electro-optical modulator comprises: a cladding layer; a waveguide core embedded in the cladding layer; a ferroelectric layer; at least two electrodes for modulating an optical wave as it passes through the waveguide core; a first conductor layer provided on the ferroelectric layer or on a first buffer layer that is provided on the ferroelectric layer, wherein the first conductor layer is electrically connected to a first electrode; and a second conductor layer provided on the ferroelectric layer or on a second buffer layer that is provided on the ferroelectric layer, wherein the second conductor layer is electrically connected to a second electrode. The at least two electrodes are configured to generate an electric-field via the first conductor layer and the second conductor layer across at least a part of the ferroelectric layer.

## Description

### TECHNICAL FIELD

The present disclosure relates to an electro-optical modulator. The disclosure proposes an electro-optical modulator, and a corresponding method of fabricating the electro-optical modulator. The electro-optical modulator comprises a ferroelectric layer, a waveguide core, and at least two electrodes, and is arranged in a new kind of way.

### BACKGROUND

An electro-optical modulator is a device which converts an electrical signal, for example, a stream of 0V and 1V signals encoding digital information, into the optical domain, e.g., by turning light *on* or *off* depending on an input voltage. Electro-optical modulation is an essential element of the modern telecommunication systems, playing a critical role in the conversion and transmission of electrical signals into optical signals. The most widely employed mechanism for this process is the electro-optic effect, commonly known as the *Pockels* effect.

However, silicon, the standard material for integrated photonics, does not exhibit the Pockels effect due to its centrosymmetric structure. This necessitates the integration of other materials to enable electro-optic modulation. One such promising candidate is Barium Titanate (BTO), which has one of the highest Pockels coefficients, making it a promising choice for on-chip modulation.

Losses in electro-optical modulators can significantly impede their performance and, consequently, the overall energy efficacy of the integrated optical systems they are a part of.

For example, losses in electro-optical modulators can result in the attenuation of the optical signal. Thus, the optical signal may not reach its intended destination with the required power levels, necessitating the use of additional amplifiers or repeaters, which in turn increases the complexity and cost of the system.

Furthermore, losses can lead to a degradation in the signal quality. Maintaining signal integrity is paramount, as the demand for high data rates is ever-increasing. Losses in the modulator can introduce noise and distortions, which can result in a higher bit error rate, making the transmitted data less reliable.

In BTO modulators (as with any modulator dependent on the Pockels effect), the level of modulation increases as the electrical field intensifies, since the refractive index of the material linearly varies with respect to the applied electric field. The proximity of the non optically transparent electrodes, classicaly metal for high frequency modultors electrodes, directly influences this effect, as closer electrodes facilitate a higher field strength under the same voltage. Thus, a straightforward method to boost modulation efficiency is to decrease the distance between metal electrodes. However, enhancing the electrical field by bringing the metals closer to the waveguide comes with a trade-off: the optical loss scales up exponentially, given the highly absorptive nature of non optically transparent electrodes such as metal.

Generally, conventional electro-optical modulators that comprise metal electrodes that are close to each other have extremely high optical losses. Further, the fabrication complexity is increased as metals must be etched with extreme high precision.

### SUMMARY

In view of the above, an objective of this disclosure is to improve the modulation efficiency of an electro-optical modulator. Another objective is to reduce losses in the electro-optical modulator. In particular, an objective is to increase the electrical field across the ferroelectric material without increasing, or while only slightly increasing or reducing the optical loss.

These and other objectives are achieved by this disclosure as described in the enclosed independent claims. Advantageous implementations are further defined in the dependent claims.

A first aspect of this disclosure provides an integrated electro-optical modulator comprising: a cladding layer; a waveguide core embedded in the cladding layer; a ferroelectric layer, wherein the waveguide core is separated from the ferroelectric layer by the cladding layer; at least two electrodes comprising a first electrode and a second electrode; a first conductor layer provided on the ferroelectric layer or on a first buffer layer that is provided on the ferroelectric layer, wherein the first conductor layer is electrically connected to the first electrode; and a second conductor layer provided on the ferroelectric layer or on a second buffer layer that is provided on the ferroelectric layer, wherein the second conductor layer is electrically connected to the second electrode; wherein the at least two electrodes are configured to receive an electrical signal thereby generating an electric-field via the first conductor layer and the second conductor layer across at least a part of the ferroelectric layer, wherein the electric-field changes a refractive index of the ferroelectric layer thereby modulating an optical wave as it passes through the waveguide core.

The electro-optical modulator may comprise a controller configured to control the at least two electrodes, for example, by providing the electrical signal.

At least one of the first conductor layer, the second conductor layer, and the initial layer may be provided directly on the ferroelectric layer.

The ferroelectric layer may be provided above the waveguide core.

At least one of the first conductor layer, the second conductor layer, and the insulating layer may be provided above the ferroelectric layer. Alternatively or additionally, at least one of the first conductor layer, the second conductor layer, and the insulating layer may be provided below the ferroelectric layer.

The cladding layer may comprise one or more cladding sub-layers. The cladding layer may be made of multiple materials. The cladding layer may be for providing electrical isolation and/or optical wave confinement inside the waveguide core.

At least one of: the first conductor, the second conductor layer, and the insulating layer may be partially or fully embedded in the cladding layer.

The waveguide core, for example, the optical wave in the waveguide core, may be optically coupled to the ferroelectric layer.

In an implementation form of the first aspect, the second conductor layer is electrically isolated from the first conductor layer.

In a further implementation form of the first aspect, the ferroelectric layer has a Pockels tensor containing at least one non-vanishing element rij where i≠j.

In a further implementation form of the first aspect, the cladding layer provides electrical insulation between the first conductor layer and the second conductor layer; or wherein the electro-optical modulator further comprises an insulating layer provided on the ferroelectric layer or on a third buffer layer that is provided on the ferroelectric layer, wherein the insulating layer provides electrical insulation between the first conductor layer and the second conductor layer.

The insulating layer may be used to define the area where the E-field is generated.

In a further implementation form of the first aspect, the ferroelectric layer is arranged between the waveguide core and at least one of: the first conductor layer, the second conductor layer, and the insulating layer if present.

In a further implementation form of the first aspect, the extension direction of the waveguide core is perpendicular to a vertical direction and a horizontal direction, wherein the ferroelectric layer is provided above the waveguide core in the vertical direction, wherein the electric-field generated by the at least two electrodes comprises a component in the vertical direction and/or a component in the horizontal direction.

In a further implementation form of the first aspect, the electric-field generated via the first conductor layer and the second conductor layer extends predominantly, for example, only, in the horizontal direction.

In a further implementation form of the first aspect, the at least two electrodes are at least three electrodes further comprising a third electrode, wherein the electro-optical modulator further comprises a third conductor layer electrically connected to the third electrode, wherein the electric-field is further generated via the third conductor layer to provide an additional component of the electric field that extends predominately in the vertical direction.

In a further implementation form of the first aspect, the first conductor layer is a p-doped semiconductor layer and the second conductor layer is a n-doped semiconductor layer.

In a further implementation form of the first aspect, a distance between the first conductor layer and the second conductor layer is 500 nm to 1500 nm.

In a further implementation form of the first aspect, at least one of: the distance between the ferroelectric layer and the waveguide core is 5 nm to 300 nm, the ferroelectric layer has a thickness of 20 nm to 2000 nm, the first conductor layer has a thickness of 20 nm to 300 nm, and the second conductor layer has a thickness of 20 nm to 300 nm.

In a further implementation form of the first aspect, at least one of: the ferroelectric layer comprises barium titanate, the waveguide core comprises silicon nitride, and each buffer layer may be a lattice buffer layer.

Each buffer layer may comprise at least one of Germanium (Ge), Tin-zinc-oxide (SZO), and strontium titanate (STO).

A second aspect of this disclosure provides a method of fabricating an integrated electro-optical modulator, the method comprising: forming a cladding layer; forming a waveguide core embedded in the cladding layer; forming a ferroelectric layer, wherein the waveguide core is separated from the ferroelectric layer by the cladding layer; forming at least two electrodes comprising a first electrode and a second electrode; forming a first conductor layer provided on the ferroelectric layer or on a buffer layer that is provided on the ferroelectric layer, wherein the first conductor layer is electrically connected to the first electrode; and forming a second conductor layer provided on the ferroelectric layer or on the buffer layer, wherein the second conductor layer is electrically connected to the second electrode; wherein the at least two electrodes are configured to receive an electrical signal thereby generating an electric-field via the first conductor layer and the second conductor layer across at least a part of the ferroelectric layer, wherein the electric-field changes a refractive index of the ferroelectric layer thereby modulating an optical wave as it passes through the waveguide core.

In an implementation form of the second aspect, the extension direction of the waveguide core is perpendicular to a vertical direction and a horizontal direction, wherein the ferroelectric layer is formed above the waveguide core in the vertical direction, wherein the electric-field generated by the at least two electrodes comprises a component in the vertical direction and/or a component in the horizontal direction.

In a further implementation form of the second aspect, the method further comprises: providing a wafer, wherein the wafer comprises a substrate and a first cladding layer; and providing the ferroelectric layer on the first cladding layer; providing a second cladding layer on the first conductor layer and the second conductor layer, to embed the first conductor layer, the second conductor layer, and the ferroelectric layer in the cladding layer formed by the first cladding layer and the second cladding layer; providing the at least two electrodes.

In a further implementation form of the second aspect, providing the ferroelectric layer comprises: bonding a ferroelectric wafer or dies to the first cladding layer, wherein the ferroelectric wafer comprises a ferroelectric layer and one or more other layers, and wherein the ferroelectric layer is bonded to the first cladding layer, wherein forming the first conductor layer, and the second conductor layer comprises: removing the one or more other layers; and providing a first conductor layer and a second conductor layer on the ferroelectric layer or on the buffer layer; or patterning the one or more other layers to form the first conductor layer and the second conductor layer on the ferroelectric layer or on the buffer layer.

In a further implementation form of the second aspect, one of: the method further comprises providing an insulating layer on the ferroelectric layer or on the buffer layer, wherein the insulating layer provides electrical insulation between the first conductor layer and the second conductor layer; patterning the one or more other layers further forms an insulating layer, wherein the insulating layer provides electrical insulation between the first conductor layer and the second conductor layer; and the second cladding layer provides electrical insulation between the first conductor layer and the second conductor layer.

In a further implementation form of the second aspect, the one or more other layers comprise the buffer layer and an initial layer provided on the buffer layer, wherein the initial layer is a semiconductor layer, wherein the method further comprises: doping a first section of the initial layer to form the first conductor layer, doping a second section of the initial layer to form the second conductor layer, and patterning the initial layer, the buffer layer, and the ferroelectric layer.

For example, patterning the buffer layer may comprise grinding and/or Chemical Mechanical Planarization and/or etching.

The ferroelectric wafer may comprise: the initial layer, the buffer layer below the initial layer, the ferroelectric layer below the buffer layer.

The method may further comprise fabricating the ferroelectric wafer by providing the initial layer, providing the buffer layer below the initial layer, growing the ferroelectric layer below the buffer layer.

The method of the second aspect may have implementation forms that correspond to the implementation forms of the electro-optical modulator of the first aspect. The method of the second aspect and its implementation forms achieve the advantages and effects described above for the electro-optical modulator of the first aspect and its respective implementation forms.

Further, in this disclosure, a first component and a second component are considered to be different components, if not explicitly mentioned otherwise. For example, a first section and a second section are considered to be different sections.

Further, in this disclosure, "*approximately*" can mean "*within a certain range comprising the nominal value*". That range may be +- 10 %, +-5% or +-2 % of the nominal value.

Notably, in this disclosure, forming or providing a layer "*on*" another layer may mean growing/depositing these layers one upon the other. Thus, surfaces of these layers may be in contact. Forming a layer "*above*" another layer may mean that this layer is formed after the other layer, but there may be formed one or more layers in between.

Further, in this disclosure, the phrase "*above*" when referring to a physical location may refer to a vertical direction, wherein the extension direction of the waveguide core is perpendicular to the vertical direction and a horizontal direction.

### BRIEF DESCRIPTION OF DRAWINGS

The above described aspects and implementation forms will be explained in the following description of specific embodiments in relation to the enclosed drawings, in which
- FIG. 1: shows an electro-optical modulator according to this disclosure.
- FIG. 2: shows a cross section of an exemplary electro-optical modulator according to this disclosure.
- FIG. 3a: shows an optical mode according to this disclosure.
- FIG. 3b: shows an E-field inside an electro-optical modulator according to this disclosure.
- FIG. 4: shows a cross section of an exemplary electro-optic modulator according to this disclosure.
- FIG. 5a: shows an optical mode according to this disclosure.
- FIG. 5b: shows an E-field inside an electro-optical modulator according to this disclosure.
- FIG. 6: shows an exemplary electro-optical modulator comprising four electrodes according to this disclosure.
- FIG. 7: shows an exemplary electro-optical modulator according to this disclosure.
- FIG. 8: shows steps for fabricating an electric-optic modulator according to this disclosure.
- FIG. 9: shows steps of a first process flow for fabricating an electric-optic modulator according to this disclosure.
- FIG. 10: shows steps of a first process flow for fabricating an electric-optic modulator according to this disclosure.
- FIG. 11: shows steps of a first process flow for fabricating an electric-optic modulator according to this disclosure.
- FIG. 12: shows steps of a second process flow for fabricating an electric-optic modulator according to this disclosure.
- FIG. 13: shows steps of a second process flow for fabricating an electric-optic modulator according to this disclosure.
- FIG. 14: shows steps of a second process flow for fabricating an electric-optic modulator according to this disclosure.
- FIG. 15: shows a method according to this disclosure.

### DETAILED DESCRIPTION OF EMBODIMENTS

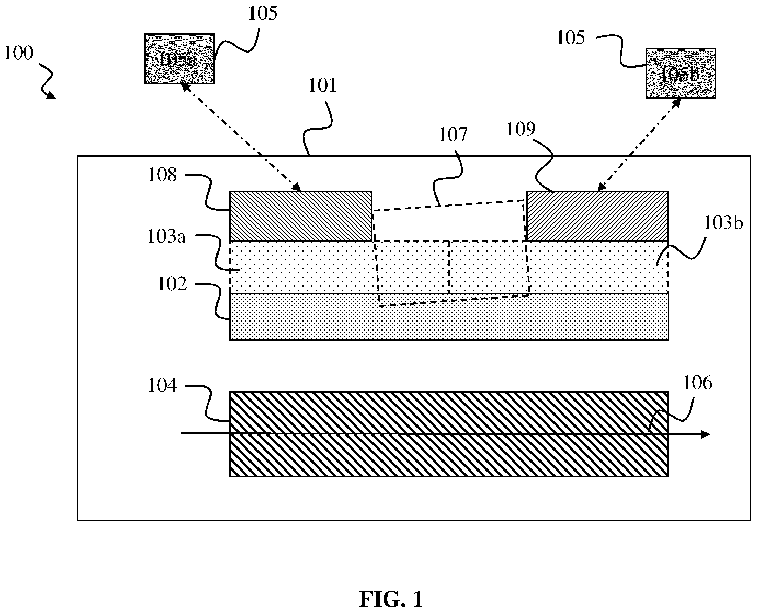

FIG. 1 shows an electro-optical modulator 100 according to this disclosure.

The integrated electro-optical modulator 100 comprises: a cladding layer 101; a waveguide core 104 embedded in the cladding layer 101; a ferroelectric layer 102, wherein the waveguide core 104 is separated from the ferroelectric layer 102 by the cladding layer 101; at least two electrodes 105 comprising a first electrode 105a and a second electrode 105b; a first conductor layer 108; and a second conductor layer 109 provided on the ferroelectric layer 102 or on a second buffer layer 103b that is provided on the ferroelectric layer 102.

The first conductor layer 108 is provided on the ferroelectric layer 102 or on a first buffer layer 103a that is provided on the ferroelectric layer 102, which is indicated by the dashed line surrounding the optional first buffer layer 103a in FIG. 1. The second conductor layer 109 is provided on the ferroelectric layer 102 or on a second buffer layer 103b that is provided on the ferroelectric layer 102, which is indicated by the dashed line surrounding the optional second buffer layer 103b in FIG. 1. The first buffer and the second buffer layer may or may not be the same layer.

The first conductor layer 108 is electrically connected to the first electrode 105a and the second conductor layer 109 is electrically connected to the second electrode 105b, which is indicated by the dashed-dotted arrows in FIG. 1.

The at least two electrodes 105 are configured to receive an electrical signal thereby generating an electric-field 107 via the first conductor layer 108 and the second conductor layer 109 across at least a part of the ferroelectric layer 102, wherein the electric-field 107 changes a refractive index of the ferroelectric layer 102 thereby modulating an optical wave 106 as it passes through the waveguide core 104.

This disclosure may be based on the integration of materials with different ferro-electric domains, for example, an electro-optic material like Barium Titanite (BTO), into an integrated photonic platform. The Pockels effect of these ferroelectric materials can be used to modify the index of refraction of the material which can be modulated by an electric field 107.

Some ferroelectric materials, for example, BTO, are known to have a high electro-optic (Pockels) effect which makes it suitable for electro-optical modulation. The strength of Pockels effect is however dependent on the crystalline orientation of the ferroelectric medium as well as light polarization with regards to the direction of the applied electric field 107. Transparent ferroelectric materials have different crystal orientations which can slightly vary from wafer to wafer or position to position on the same wafer. Therefore, it is generally difficult to assess the optimum direction of the applied field to harness the maximum Pockels effect.

Multiple electrode configurations may be used to orient the electrical field 107 in all spatial directions. This allows to modulate both a Transverse Electric (TE) mode and a Transverse Magnetic (TM) mode, and to potentially deal with semi-random directionality of crystals, as it may be easy to change the electrical field 107 direction.

In order to maximize the electric field 107 and, consequently, the modulation, the voltage may be brought as close as possible to the waveguide, i.e., metal lines may be brought extremely close to the optical mode. However, this can result in a dramatic increase in optical loss when metals are brought too close to the waveguide.

Silicon as a material may be used to enhance the strength of the effect, by pulling a large part of the optical mode into the bulk of the thin film ferroelectric material.

An alternative for BTO as a ferroelectric material may be, for example, Lithium Niobate (LNO), or Lead Zirconate Titanate (PZT).

The electro-optical modulator 100 may be used for a modulator, a phase shifter, and a polarization rotator.

To establish the silicon, a Silicon On-Insulator (SOI) wafer may be used instead of a silicon wafer. Since the silicon layer may be patterned before bonding, if it is sufficiently thinned and doped, it can also function as a bottom electrode.

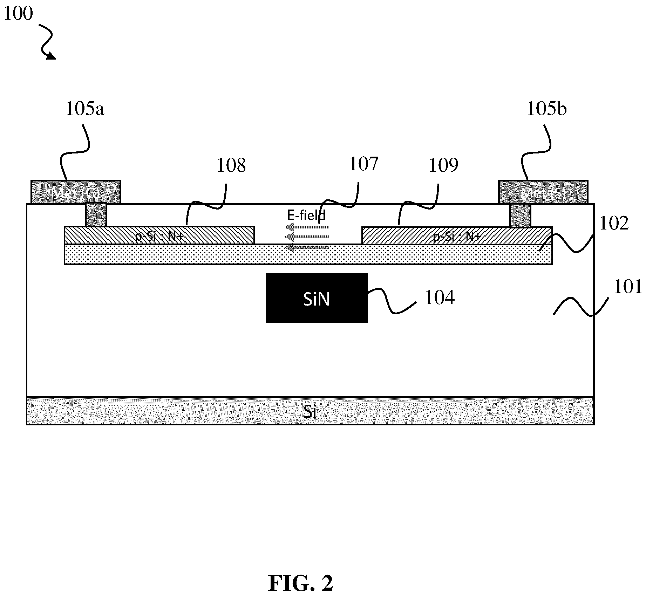

FIG. 2 shows a cross section of an exemplary electro-optical modulator 100 according to this disclosure.

The cross section may be perpendicular to the extension direction of the waveguide core 104.

FIG. 2 shows a first and a second conductor layer 108, 109, for example, doped silicon, above a ferroelectric layer 102, for example, BTO, and waveguide core 104, for example, SiN. The first and second conductor layer 109 may be used as electrodes or as an extension of the electrodes 105a, 105b. In comparison with metal electrodes, doped silicon may have 4 to 7 orders of magnitude less optical loss, with exact value depending on the doping level of silicon as well as the type of the metal used.

The first conductor layer 108 may be separated, in an area above the waveguide core 104, from the second conductor layer 109 by a cladding layer 101. Thus, an electric-field 107 can be efficiently and closely applied across the ferroelectric layer 102.

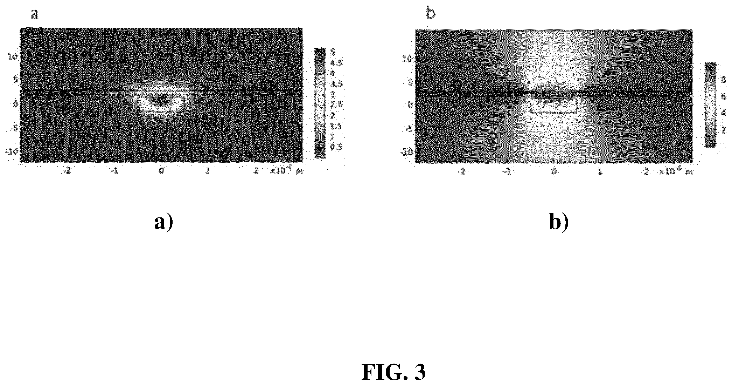

FIG. 3a shows an optical mode according to this disclosure.

The exemplary mode was calculated at 1550 nm.

FIG. 3b shows an E-field 107 inside an electro-optical modulator 100 according to this disclosure.

Fig. 3a shows the calculated optical mode inside the modulator device. In this exemplary simulation, the distance between the two silicon electrodes was set to 1 µm. This gives an approximately 10-times improvement in terms of electrical field 107 enhancement compared to metal electrodes which are typically approximately 10 µm apart to avoid excessive optical loss. The calculated electrical field 107 shown in FIG. 3b in x-direction (electrical field 107 orientation as shown in FIG. 2) is based on 10V applied voltage. A high modulation efficiency of 0.36 V.cm, and only 1.8 dB loss can be achieved to achieve a full extinction (π-phase shift).

The calculations associated with FIGs. 3a and 3b are based on an electro-optical modulator 100 as shown in FIG. 2.

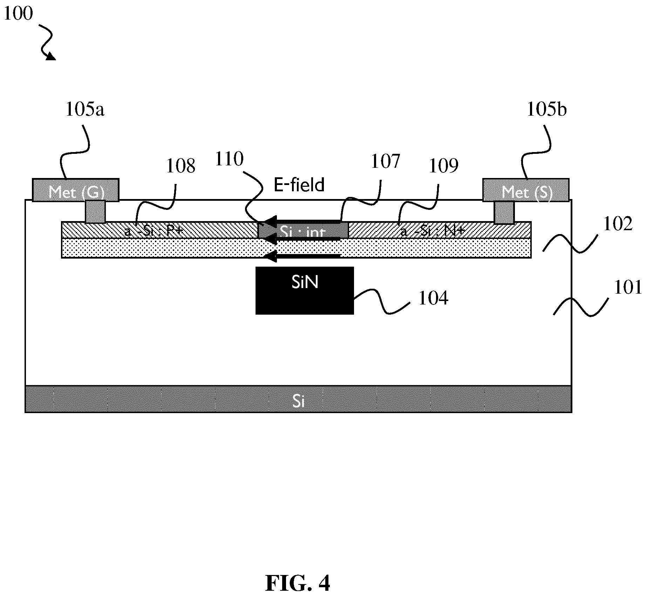

FIG. 4 shows a cross section of an exemplary electro-optic modulator according to this disclosure.

For example, the waveguide core 104 may be a SiN layer..

The first conductor layer 108 may be separated, in an area above the waveguide core 104, from the second conductor layer 109 by an insulting layer. Thus, an electric-field 107 can be efficiently and closely applied across the ferroelectric layer 102.

The exemplary electro-optic modulator shown FIG. 4 is, for example, the electro-optic modulator shown FIG. 2 additionally comprising the insulting layer.

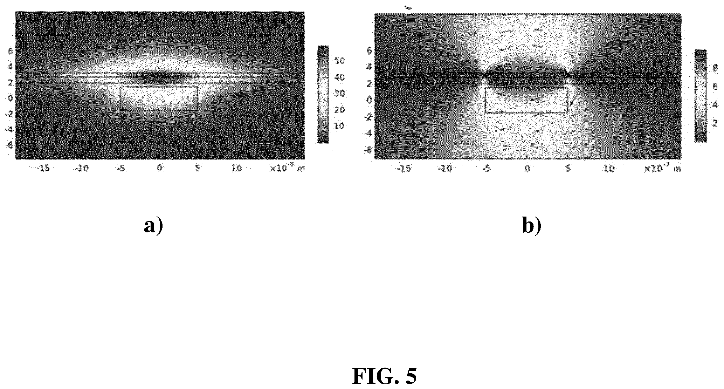

FIG. 5a shows an optical mode according to this disclosure.

FIG. 5b shows a shows an E-field 107 inside an electro-optical modulator 100 according to this disclosure.

The modulation efficiency of the electro-optical modulator 100 according to this disclosure may be improved compared to conventional electro-optical modulators 100. For example, the figure-of-merit Vπ•L of the electro-optical modulator 100 may be 0.24 Vcm for an intrinsic region width of 1 µm, and a 1.7 dB loss for the device length of Lπ = 240 µm.

The calculations associated with FIGs. 5a and 5b are based on an electro-optical modulator 100 as shown in FIG. 4.

The electro-optic modulator may have at least one of the following advantages: 1) an increased mode overlap with the ferroelectric layer 102, 2) up to three modulation effects can be combined: plasma dispersion effect (carriers in Si), Kerr effect (intrinsic region in Si), and Pockels effect (in ferroelectric layer 102), and 3) post-fabrication control over the intrinsic width may be enabled, which may allow for trading off the bandwidth and modulation depth using reverse DC bias.

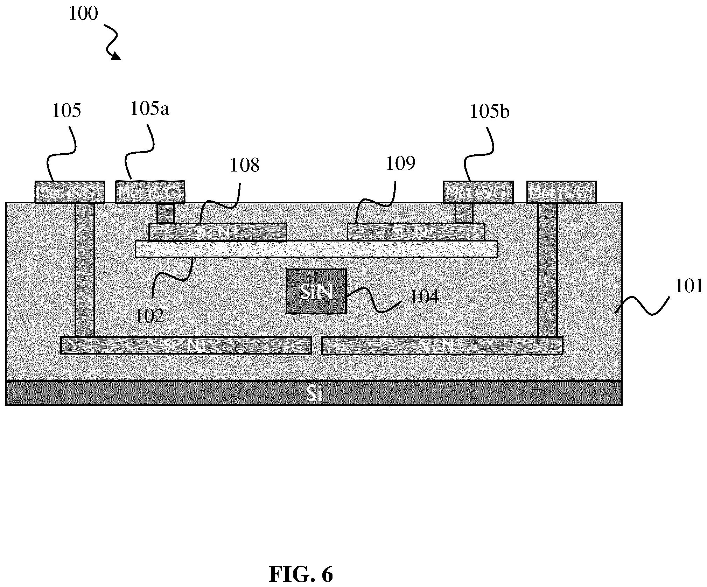

The electro-optical modulator 100 according to this disclosure may include other configurations as exemplary shown in FIG. 6.

FIG. 6 shows an exemplary electro-optical modulator 100 comprising four electrodes 105 according to this disclosure. In this example, two electrodes 105a, 105b are provided on the ferroelectric layer 102 from above and two other electrodes are below the ferroelectric layer 102.

Altering the direction of the electric field 107 may be particularly advantageous in order to maximize the modulation of both light polarizations. Moreover, BTO, along with similar ferroelectric materials, is composed of numerous electric domains with varying directions. Although the orientation of these domains is vital for maximizing electro-optical modulation, they are challenging to ascertain prior to measurement.

Therefore, the ability to apply the electric field 107 in any desired dimension is a beneficial feature.

This versatility can also facilitate the realization of devices beyond modulators, such as polarization rotators.

Apart from the vertical direction, the versatility of the platform allows for application of the electric field 107 in any desired dimension.

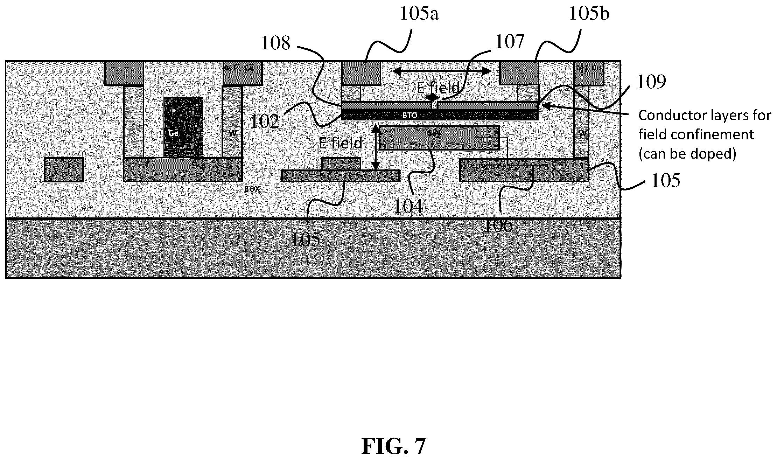

FIG. 7 shows an exemplary electro-optical modulator 100 according to this disclosure.

The exemplary electro-optical modulator 100 comprises a plurality of electrodes 105.

The plurality of electrodes 105 may be configured to apply an electric field 107 across the ferroelectric layer 102 in one or more directions, for example, all three dimensions, based on the electrode configurations. In this example, three exemplary electric fields 107 are shown, one in a vertical direction and two in a horizontal direction. The electrical field 107 between the first conductor layer 108 and the second conductor layer 109 is applied across a significantly smaller area to increase its strength.

FIG. 7 shows a transition of an optical wave 106 from the waveguide core 104 to another waveguide core 104 and exemplary dimensions and materials of the electro-optical modulator 100.

The controller may be a processor.

Generally, the processor may be configured to perform, conduct or initiate the various operations of the electro-optic modulator 100 described herein. The processor may comprise hardware and/or may be controlled by software. The hardware may comprise analog circuitry or digital circuitry, or both analog and digital circuitry. The digital circuitry may comprise components such as application-specific integrated circuits (ASICs), field-programmable arrays (FPGAs), digital signal processors (DSPs), or multi-purpose processors. The electro-optic modulator 100 may further comprise memory circuitry, which stores one or more instruction(s) that can be executed by the processor, in particular under control of the software. For instance, the memory circuitry may comprise a non-transitory storage medium storing executable software code which, when executed by the processor, causes the various operations of the electro-optic modulator 100 to be performed. In one embodiment, the electro-optic modulator 100 may comprises one or more processors and a non-transitory memory connected to the one or more processors. The non-transitory memory may carry executable program code which, when executed by the one or more processors, causes the electro-optic modulator 100 to perform, conduct or initiate the operations or methods described herein.

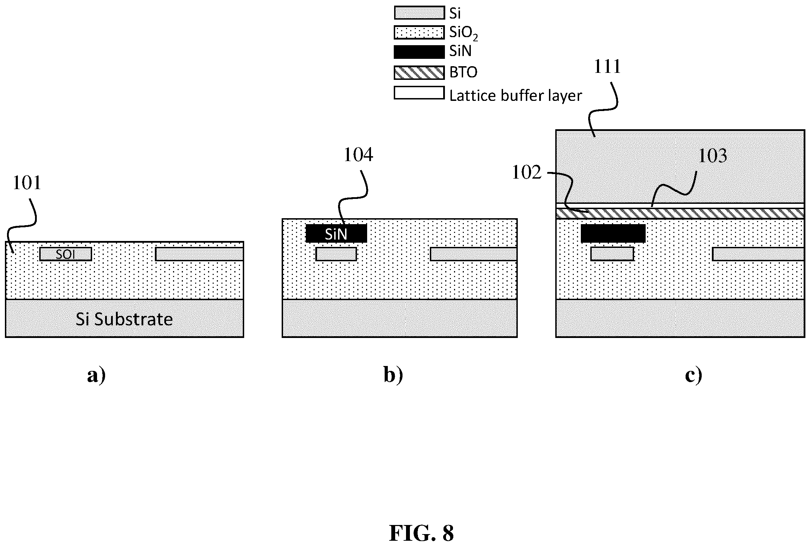

FIGs. 8 to 11 show a first process flow of fabricating an exemplary electric-optic modulator according to this disclosure.

FIGs. 8, 12, 13, and 14 show a second process flow of fabricating an exemplary electric-optic modulator according to this disclosure.

Further, FIGs. 8 to 14 show exemplary materials that may be used for the electric-optic modulator. Alternatively, other materials may be used.

FIG. 8 shows steps for fabricating an electric-optic modulator according to this disclosure.

FIG. 8a shows providing a SOI wafer, performing Si patterning (+deep etch), performing oxide deposition, and performing planarization.

FIG. 8b shows performing low pressure chemical vapor deposition (LPCVD) SiN growth, for example, at approximately 800°C, and planarization.

FIG. 8c shows BTO waferbonding.

For example, to generate a ferroelectric wafer, a ferroelectric layer 102 may be grown on a buffer layer 103, which may be provided on an initial layer 111, for example, a silicon substrate.

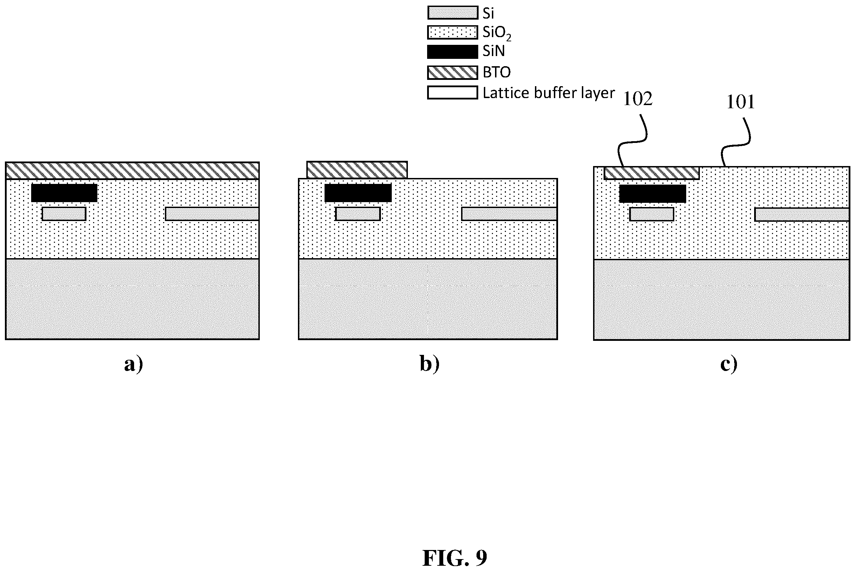

FIG. 9 shows steps of the first process flow for fabricating an electric-optic modulator according to this disclosure.

FIG. 9a shows removal of at least a part of the ferroelectric wafer.

The removal may comprise at least one of: buffer layer removal, grinding, chemical mechanical planarization (CMP), and annealing.

FIG. 9b shows BTO patterning, for example, by ion beam etching and milling.

FIG. 9c shows oxide deposition and BTO planarization.

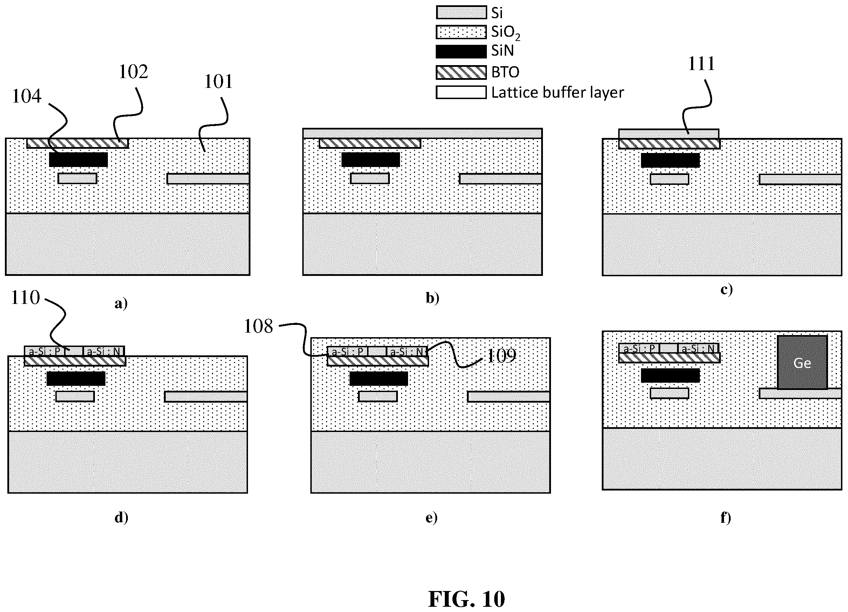

FIG. 10 shows steps of the first process flow for fabricating an electric-optic modulator according to this disclosure.

FIG. 10a shows an intermediate structure for fabricating an electric-optic modulator. For example, the intermediate structure as shown in FIG. 9c.

FIG. 10b shows a-Si deposition, for example, at 400-450°C..

FIG. 10c shows silicon patterning.

FIG. 10d shows performing ion implantations.

FIG. 10e shows oxide deposition and CMP.

FIG. 10f shows Ge window etching, Ge epitaxial growth, CMP, and doping, for example, at 550 °C.

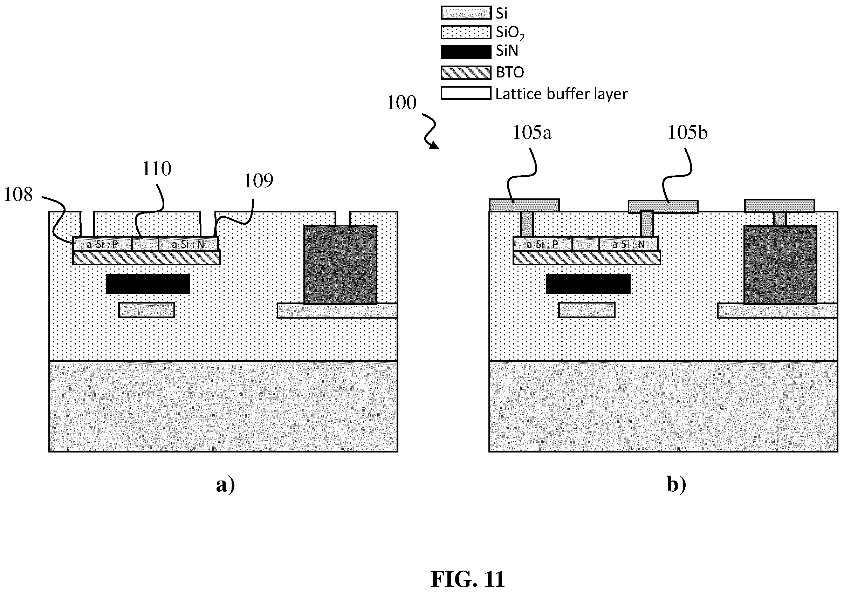

FIG. 11 shows steps of the first process flow for fabricating an electric-optic modulator according to this disclosure.

FIG. 11a shows via definition.

FIG. 11b shows metal deposition, and interconnect formation.

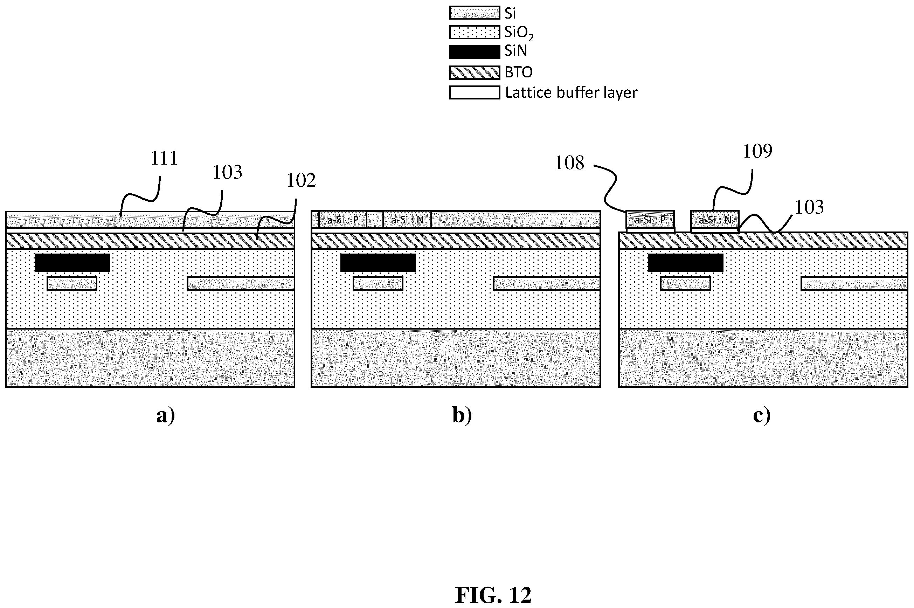

FIG. 12 shows steps of the second process flow for fabricating an electric-optic modulator according to this disclosure. The steps shown in FIG. 12 may be performed after the steps shown in FIG. 8.

FIG. 12a shows removal of at least a part of the ferroelectric wafer.

The removal may comprise at least one of: grinding, and CMP.

FIG. 12b shows performing ion implantation.

Further, rapid thermal annealing, for example, at approximately 1050°C and for 5s, may be performed.

FIG. 12c shows silicon patterning, buffer layer removal, and BTO annealing.

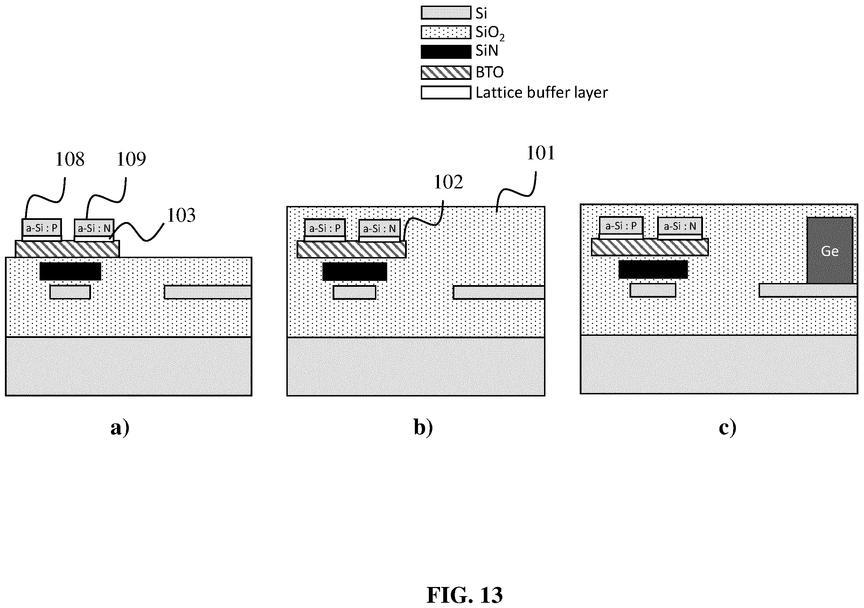

FIG. 13 shows steps of the second process flow for fabricating an electric-optic modulator according to this disclosure.

FIG. 13a shows buffer layer removal and BTO patterning.

FIG. 13b shows oxide deposition and CMP.

FIG. 13c shows Ge window etching, Ge epitaxial growth, CMP, and doping, for example, at 550 °C.

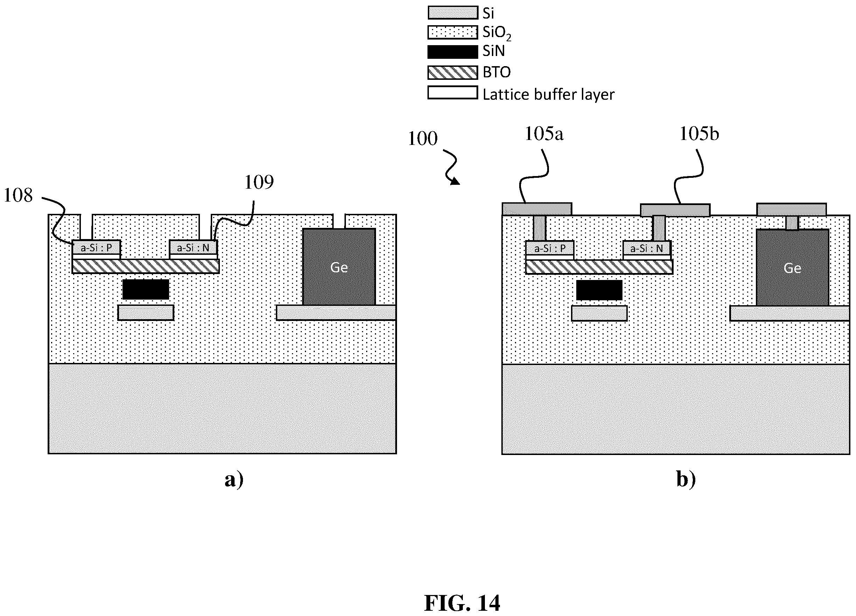

FIG. 14 shows steps of the second process flow for fabricating an electric-optic modulator according to this disclosure.

FIG. 14a shows via definition.

FIG. 14b shows metal deposition, and interconnect formation.

The first and/or the second process flow may form a general process flow of realizing a photonic platform including, for example, Si/SiN/BTO.

The manufacturing method of the electro-optical modulator 100 according to this disclosure may be directly compatible with standard integrated photonics used in integrated photonics.

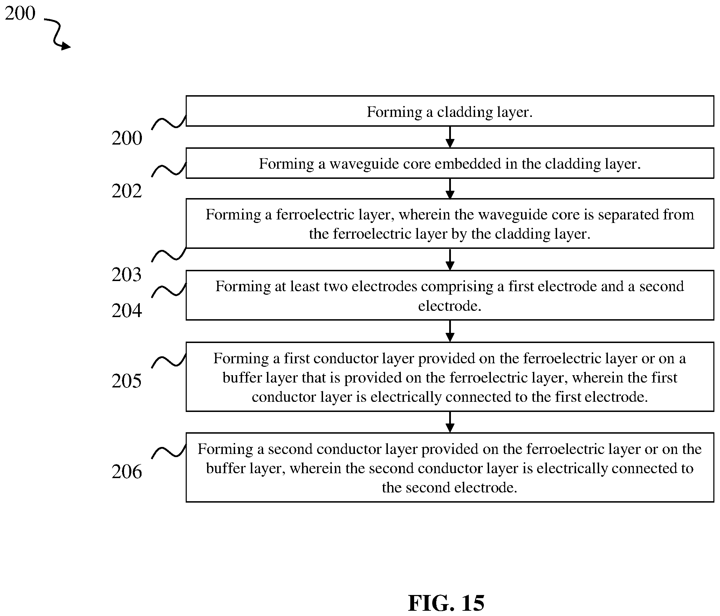

FIG. 15 shows a method 200 according to this disclosure. The method 200 is a method of fabricating an integrated electro-optical modulator 100, for example, the electro-optical modulator 100 shown in FIG. 1. The method 200 comprises a step 201 of forming a cladding layer 101. Further, the method 200 comprises a step 202 of forming a waveguide core 104 embedded in the cladding layer 101. Further, the method 200 comprises a step 203 of forming a ferroelectric layer 102, wherein the waveguide core 104 is separated from the ferroelectric layer 102 by the cladding layer 101. Further, the method 200 comprises a step 204 of forming at least two electrodes 105 comprising a first electrode 105a and a second electrode 105b. Further, the method 200 comprises a step 205 of forming a first conductor layer 108 provided on the ferroelectric layer 102 or on a buffer layer 103 that is provided on the ferroelectric layer 102, wherein the first conductor layer 108 is electrically connected to the first electrode 105a. Further, the method 200 comprises a step 206 of forming a second conductor layer 109 provided on the ferroelectric layer 102 or on the buffer layer 103, wherein the second conductor layer 109 is electrically connected to the second electrode 105b.

Gnerally, the at least two electrodes 105 are configured to receive an electrical signal thereby generating an electric-field 107 via the first conductor layer 108 and the second conductor layer 109 across at least a part of the ferroelectric layer 102, wherein the electric-field 107 changes a refractive index of the ferroelectric layer 102 thereby modulating an optical wave 106 as it passes through the waveguide core 104.

In the claims as well as in the description of this disclosure, the word "comprising" does not exclude other elements or steps and the indefinite article "a" or "an" does not exclude a plurality. A single element may fulfill the functions of several entities or items recited in the claims. The mere fact that certain measures are recited in the mutual different dependent claims does not indicate that a combination of these measures cannot be used in an advantageous implementation.

## Claims

1. An integrated electro-optical modulator (100) comprising:
a cladding layer (101);
a waveguide core (104) embedded in the cladding layer (101);
a ferroelectric layer (102), wherein the waveguide core (104) is separated from the ferroelectric layer (102) by the cladding layer (101);
at least two electrodes (105) comprising a first electrode (105a) and a second electrode (105b);
a first conductor layer (108) provided on the ferroelectric layer (102) or on a first buffer layer (103a) that is provided on the ferroelectric layer (102), wherein the first conductor layer (108) is electrically connected to the first electrode (105a); and
a second conductor layer (109) provided on the ferroelectric layer (102) or on a second buffer layer (103b) that is provided on the ferroelectric layer (102), wherein the second conductor layer (109) is electrically connected to the second electrode (105b);
wherein the at least two electrodes (105) are configured to receive an electrical signal thereby generating an electric-field (107) via the first conductor layer (108) and the second conductor layer (109) across at least a part of the ferroelectric layer (102), wherein the electric-field (107) changes a refractive index of the ferroelectric layer (102) thereby modulating an optical wave (106) as it passes through the waveguide core (104).

2. The electro-optical modulator (100) according to any one of the preceding claims,
wherein the second conductor layer (109) is electrically isolated from the first conductor layer (108).

3. The electro-optical modulator (100) according to any one of the preceding claims,
wherein the ferroelectric layer (102) has a Pockels tensor containing at least one non-vanishing element rᵢⱼ where i≠j.

4. The electro-optical modulator (100) according to any one of the preceding claims,
wherein the cladding layer (101) provides electrical insulation between the first conductor layer (108) and the second conductor layer (109); or
wherein the electro-optical modulator (100) further comprises an insulating layer provided on the ferroelectric layer (102) or on a third buffer layer (103) that is provided on the ferroelectric layer (102), wherein the insulating layer provides electrical insulation between the first conductor layer (108) and the second conductor layer (109).

5. The electro-optical modulator (100) according to any one of the preceding claims,
wherein the ferroelectric layer (102) is arranged between the waveguide core (104) and at least one of: the first conductor layer (108), the second conductor layer (109), and the insulating layer if present.

6. The electro-optical modulator (100) according to any one of the preceding claims,
wherein the extension direction of the waveguide core (104) is perpendicular to a vertical direction and a horizontal direction,
wherein the ferroelectric layer (102) is provided above the waveguide core (104) in the vertical direction,
wherein the electric-field (107) generated by the at least two electrodes (105) comprises a component in the vertical direction and/or a component in the horizontal direction.

7. The electro-optical modulator (100) according to claim 6,
wherein the electric-field (107) generated via the first conductor layer (108) and the second conductor layer (109) extends predominantly in the horizontal direction.

8. The electro-optical modulator (100) according to claim 6 or 7,
wherein the at least two electrodes (105) are at least three electrodes further comprising a third electrode,
wherein the electro-optical modulator (100) further comprises a third conductor layer electrically connected to the third electrode,
wherein the electric-field (107) is further generated via the third conductor layer to provide an additional component of the electric field (107) that extends predominately in the vertical direction.

9. The electro-optical modulator (100) according to any one of the preceding claims,
wherein the first conductor layer (108) is a p-doped semiconductor layer and the second conductor layer (109) is a n-doped semiconductor layer.

10. A method of fabricating an integrated electro-optical modulator (100), the method comprising:
forming a cladding layer (101);
forming a waveguide core (104) embedded in the cladding layer (101);
forming a ferroelectric layer (102), wherein the waveguide core (104) is separated from the ferroelectric layer (102) by the cladding layer (101);
forming at least two electrodes (105) comprising a first electrode (105a) and a second electrode (105b);
forming a first conductor layer (108) provided on the ferroelectric layer (102) or on a buffer layer (103) that is provided on the ferroelectric layer (102), wherein the first conductor layer (108) is electrically connected to the first electrode (105a); and
forming a second conductor layer (109) provided on the ferroelectric layer (102) or on the buffer layer (103), wherein the second conductor layer (109) is electrically connected to the second electrode (105b);
wherein the at least two electrodes (105) are configured to receive an electrical signal thereby generating an electric-field (107) via the first conductor layer (108) and the second conductor layer (109) across at least a part of the ferroelectric layer (102), wherein the electric-field (107) changes a refractive index of the ferroelectric layer (102) thereby modulating an optical wave (106) as it passes through the waveguide core (104).

11. The method according to claim 10,
wherein the extension direction of the waveguide core (104) is perpendicular to a vertical direction and a horizontal direction,
wherein the ferroelectric layer (102) is formed above the waveguide core (104) in the vertical direction,
wherein the electric-field (107) generated by the at least two electrodes (105) comprises a component in the vertical direction and/or a component in the horizontal direction.

12. The method according to claim 10 or 11 comprising:
providing a wafer, wherein the wafer comprises a substrate and a first cladding layer (101); and
providing the ferroelectric layer (102) on the first cladding layer (101);
providing a second cladding layer (101) on the first conductor layer (108) and the second conductor layer (109), to embed the first conductor layer (108), the second conductor layer (109), and the ferroelectric layer (102) in the cladding layer (101) formed by the first cladding layer (101) and the second cladding layer (101);
providing the at least two electrodes (105).

13. The method according to claim 12,
wherein providing the ferroelectric layer (102) comprises:
bonding a ferroelectric wafer to the first cladding layer (101), wherein the ferroelectric wafer comprises a ferroelectric layer (102) and one or more other layers, and wherein the ferroelectric layer (102) is bonded to the first cladding layer (101),
wherein forming the first conductor layer (108), and the second conductor layer (109) comprises:
removing the one or more other layers; and
providing a first conductor layer (108) and a second conductor layer (109) on the ferroelectric layer (102) or on the buffer layer (103); or
patterning the one or more other layers to form the first conductor layer (108) and the second conductor layer (109) on the ferroelectric layer (102) or on the buffer layer (103).

14. The method according to claim 12 or 13,
wherein one of:
the method further comprises providing an insulating layer on the ferroelectric layer (102) or on the buffer layer (103), wherein the insulating layer provides electrical insulation between the first conductor layer (108) and the second conductor layer (109);
patterning the one or more other layers further forms an insulating layer, wherein the insulating layer provides electrical insulation between the first conductor layer (108) and the second conductor layer (109); and
the second cladding layer (101) provides electrical insulation between the first conductor layer (108) and the second conductor layer (109).

15. The method according to claim 13 or 14,
wherein the one or more other layers comprise the buffer layer (103) and an initial layer (111) provided on the buffer layer (103),
wherein the initial layer (111) is a semiconductor layer,
wherein the method further comprises:
doping a first section of the initial layer (111) to form the first conductor layer (108),
doping a second section of the initial layer (111) to form the second conductor layer (109), and
patterning the initial layer (111), the buffer layer (103), and the ferroelectric layer (102).
